# EUROPEAN PATENT SPECIFICATION

(11) **EP 2 557 131 B1**
(45) Date of publication and mention of the grant of the patent: **29.05.2019**
(21) Application number: 10849423.8
(22) Date of filing: 06.04.2010
(51) Int. Cl.: C09D 5/16, C09D 133/02, C09D 201/00, C09D 133/14, C08F 220/18

(54) **ANTIFOULING COATING COMPOSITION, METHOD FOR PRODUCING ANTIFOULING COATING FILM, AND ANTIFOULING COATING FILM**
BEWUCHSHEMMUNGSBESCHICHTUNGSZUSAMMENSETZUNG, VERFAHREN ZUR HERSTELLUNG EINES BEWUCHSHEMMUNGBESCHICHTUNGSFILMS UND BEWUCHSHEMMUNGBESCHICHTUNGSFILM
COMPOSITION DE REVÊTEMENT ANTISALISSURES, PROCÉDÉ DE PRODUCTION D'UN FILM DE REVÊTEMENT ANTISALISSURES ET FILM DE REVÊTEMENT ANTISALISSURES

(43) Date of publication of application: 13.02.2013
(73) Proprietor: Mitsubishi Chemical Corporation, Tokyo 100-8251 (JP)
(72) Inventor: IWAMOTO, Akio, Chiyoda-ku Tokyo 100-8251 (JP); NAKAMURA, Sueo, Chiyoda-ku Tokyo 100-8251 (JP); KANAZAWA, Nobuaki, Chiyoda-ku Tokyo 100-8251 (JP)
(74) Representative: Ter Meer Steinmeister & Partner
(86) International application number: PCT/JP2010/056251
(87) International publication number: WO 2011/125179

(56) References cited:
- GB-A- 1 303 179
- JP-A- 3 077 677
- JP-A- 8 209 058
- JP-A- 8 283 362
- JP-A- 2000 273 384
- JP-A- 2001 200 020
- JP-A- 2002 037 827
- JP-A- 2002 241 676
- JP-A- 2003 171 579
- JP-A- 2006 206 873
- JP-A- 2006 206 873
- JP-A- 2007 023 243
- JP-A- 2010 001 395
- JP-A- 2010 077 250
- US-A1- 2006 258 772

## Description

### TECHNICAL FIELD

The present invention relates to an antifouling paint composition and an antifouling paint film.

### BACKGROUND ART

An antifouling paint is painted on a submerged portion of ships and marine structures to prevent a corrosion or a drop of cruising speed of the ships due to the adherence of marine organisms such as barnacles, teredos, and algae. Also, an antifouling paint is also painted on a net for cultivation to prevent a clogging of the net due to the adherence of the marine organisms.

As this antifouling paint, a antifouling paint having a self-abradability which contains an organotin is known in which it develops a long-term antifouling property by gradually eluting the surface of the paint film to make an antifouling component always exposed on the surface of the paint film. However, if an organotin is used as the antifouling paint, the organotin to be eluted into seawater affects a fish and seafood, and thereby the development of a paint having a self-abradability which does not contain an organotin is advanced. For example, Patent Document 1 and US 2006/0258772 A1 disclose antifouling paint compositions containing an acrylic polymer having a metal ester structure such as Mg, Zn and Cu.

Further, with consideration for the various influences by the organic solvent volatilized from the paint, there is also a study for reducing the amount of the organic solvent contained in the paint. For example, Patent Document 2 discloses an antifouling paint which contains an acrylic resin varnish having a metal ester structure at the side chain and which has a non-volatile amount of 40 mass% or more, a viscosity at 25°C of 18 poises or less, and an organic solvent content of 400 g/l or less.

### PRIOR ART DOCUMENT

### PATENT DOCUMENT

Patent Document 1: JP 2000-273384 A
Patent Document 2: JP 2002-241676 A

### SUMMARY OF THE INVENTION

### PROBLEM TO BE SOLVED BY THE INVENTION

However, since the acrylic polymer in the antifouling paint composition disclosed in Patent Document 1 had a high viscosity, it was necessary to dilute it to a viscosity suitable for the painting by using a large amount of an organic solvent. Thus, the drying of the paint film took time, too. Also, there is a problem that the paint film formed of the antifouling paint disclosed in Patent Document 2 had a low molecular weight and a low paint film strength.

The object of the present invention is to provide an antifouling paint composition, by which a paint film can be formed using a small amount of an organic solvent, in which the strength and the self-abradability can be maintained for a long period, and by which a paint film having an excellent antifouling property can be formed. Also, the object of the present invention is to provide an antifouling paint film and a production method of the same, in which the strength and the self-abradability can be maintained for a long period, and by which an antifouling property can be realized.

### MEANS OF SOLVING THE PROBLEMS

The first summary of the present invention is an antifouling paint composition, comprising an acrylic polymer (P), a radical polymerizable monomer (M) and an organic peroxide (O), wherein at least one of the acrylic polymer (P) and the radical polymerizable monomer (M) has a bivalent metal ester structure, in accordance with present claim 1.

The second summary of the present invention is a production method of an antifouling paint film, comprising decomposing an organic peroxide (O) in a state where an antifouling paint composition which comprises an acrylic polymer (P), a radical polymerizable monomer (M) and the organic peroxide (O) is applied on a substrate, wherein at least one of the acrylic polymer (P) and the radical polymerizable monomer (M) has a bivalent metal ester structure, in accordance with present claim 6.

The third summary of the present invention is an antifouling paint film obtained by the above-mentioned production method.

### EFFECT OF THE INVENTION

According to the present invention, the amount of an organic solvent used when a paint film is formed can be decreased, the strength and the self-abradability can be maintained for a long period, and a paint film having an excellent antifouling property can be obtained.

### MODE FOR CARRYING OUT THE INVENTION

### <Antifouling paint composition>

The antifouling paint composition of the present invention contains an acrylic polymer (P), a radical polymerizable monomer (M) and an organic peroxide (O). Since the antifouling paint composition of the present invention contains the radical polymerizable monomer (M), if the viscosity of acrylic polymer (P) is high, it can be adjusted to a viscosity suitable for the painting without using a large amount of an organic solvent. Also, even if the molecular weight of acrylic polymer (P) is low, since the paint film formed by using the antifouling paint composition of the present invention comes to contain a polymer obtained by polymerizing the radical polymerizable monomer (M) with the organic peroxide (O), the strength of the paint film can be maintained.

Further, in the present invention, the acrylic polymer (P) and optionally the radical polymerizable monomer (M) has a bivalent metal ester structure. By this, a polymer having a bivalent metal ester structure exists in the paint film obtained from the antifouling paint composition of the present invention. And, the paint film shows self-abradability by hydrolyzing the bivalent metal ester structure of this polymer in seawater. By this, the antifouling component is always exposed on the surface of the paint film to develop a long-term antifouling property.

Also, from the viewpoint of raising the solubility of the paint film formed, it is preferable that the radical polymerizable monomer (M) also has a bivalent metal ester structure.

Note that, the bivalent metal composing the bivalent metal ester structure is preferably magnesium (Mg), zinc (Zn) or copper (Cu).

### (Acrylic polymer (P))

The acrylic polymer (P) is a polymer obtained by homopolymerization or copolymerization of (meth)acrylic monomers: The (meth)acrylic monomer (Ma) may have one (meth)acrylyl group and may have two (meth)acrylyl groups, and may have another radical polymerizable functional group except for the (meth)acrylyl groups. As a monomer copolymerized with the (meth)acrylic monomer (Ma), a non-acrylic monomer (Mb) can also be used.

The acrylic polymer (P) has a bivalent metal ester structure (hereinafter, this polymer is also referred to as "metal-containing acrylic polymer (Pm)".). A (meth)acrylic monomer (Mc) having a bivalent metal ester structure (hereinafter, also referred to as "metal-containing acrylic monomer (Mc)") is used as (meth)acrylic monomer (Ma), or non-acrylic monomer (Md) having a bivalent metal ester structure (hereinafter, also referred to as "metal-containing non-acrylic monomer (Md)") is used as a monomer copolymerized with the (meth)acrylic monomer (Ma). Alternatively, after (meth)acrylic acid is homopolymerized or copolymerized, at least a part of the (meth)acrylic acid units may be esterified using an oxide, a hydroxide or a salt of a bivalent metal. Among these, a polymer obtained by copolymerizing the metal-containing acrylic monomer (Mc) is preferable.

The acrylic polymer (P) can be used in combination with two or more kinds.

Examples of (meth)acrylic monomer (Ma) except for the metal-containing acrylic monomer (Mc) include:
(meth)acrylic acid;
(meth)acrylate monomers such as methyl (meth)acrylate, ethyl (meth)acrylate, 2-methoxyethyl (meth)acrylate, 2-ethoxyethyl (meth)acrylate, phenoxyethyl (meth)acrylate, 2-(2-ethyl hexaoxy)ethyl (meth)acrylate, 1-methyl-2-methoxyethyl (meth)acrylate, 3-methoxybutyl (meth)acrylate, 3-methyl-3-methoxybutyl (meth)acrylate, m-methoxyphenyl (meth)acrylate, p-methoxyphenyl (meth)acrylate, o-methoxyphenylethyl (meth)acrylate, m-methoxyphenylethyl (meth)acrylate, p-methoxyphenylethyl (meth)acrylate, n-propyl (meth)acrylate, i-propyl (meth)acrylate, n-butyl (meth)acrylate, i-butyl (meth)acrylate, sec-butyl (meth)acrylate, t-butyl (meth)acrylate, t-amyl (meth)acrylate, n-octyl (meth)acrylate, 2-ethylhexyl (meth)acrylate, lauryl (meth)acrylate, myristyl (meth)acrylate, palmityl (meth)acrylate, stearyl (meth)acrylate, behenyl (meth)acrylate, benzyl (meth)acrylate, phenyl (meth)acrylate, isobornyl (meth)acrylate, cyclohexyl (meth)acrylate, glycidyl (meth)acrylate, trifluoroethyl (meth)acrylate, perfluorooctyl (meth)acrylate, γ-(meth)acryloxypropyl trimethoxy silane, γ-(meth)acryloxypropyl triethoxy silane, γ-(meth)acryloxypropyl methyl dimethoxy silane, and γ-(meth)acryloxypropyl methyl diethoxy silane;
hydroxyl group-containing (meth)acrylate monomers such as 2-hydroxyethyl (meth)acrylate, 2-hydroxypropyl (meth)acrylate, 3-hydroxypropyl (meth)acrylate, 2-hydroxybutyl (meth)acrylate, and 4-hydroxybutyl (meth)acrylate; adducts of a hydroxyl group-containing (meth)acrylate monomer such as 2-hydroxyethyl (meth)acrylate or 2-hydroxypropyl (meth)acrylate with ethylene oxide, propylene oxide, γ-butyrolactone, ε-caprolactone, or the like; dimers or trimers of a hydroxyl group-containing (meth)acrylate monomer such as 2-hydroxyethyl (meth)acrylate or 2-hydroxypropyl (meth)acrylate; (meth)acrylate monomers with a plurality of hydroxyl groups such as glycerol (meth)acrylate;
primary and secondary amino group-containing (meth)acrylate monomers such as butylaminoethyl (meth)acrylate and (meth)acrylamide;
tertiary amino group-containing (meth)acrylate monomers such as dimethylaminoethyl (meth)acrylate, diethylaminoethyl (meth)acrylate, dimethylaminopropyl (meth)acrylate, dimethylaminobutyl (meth)acrylate, dibutylaminoethyl (meth)acrylate, dimethylaminoethyl (meth)acrylamide, and dimethylaminopropyl (meth)acrylamide; and
multifunctional (meth)acrylate monomers such as ethylene glycol di(meth)acrylate, diethylene glycol di(meth)acrylate, triethylene glycol di(meth)acrylate, 1,2-propylene glycol di(meth)acrylate, 1,3-propylene glycol di(meth)acrylate, 1,3-butylene glycol di(meth)acrylate, 1,4-butylene glycol di(meth)acrylate, 1,6-hexanediol di(meth)acrylate, neopentyl glycol di(meth)acrylate, 1,9-nonanediol di(meth)acrylate, 1,10-decanediol di(meth)acrylate, polyethylene glycol di(meth)acrylates, trimethylolpropane tri(meth)acrylate, pentaerythritol tri(meth)acrylate, pentaerythritol tetra(meth)acrylate, dipentaerythritol hexa(meth)acrylate, and allyl (meth)acrylate. The (meth)acrylic monomer (Ma) except for the metal-containing acrylic monomer (Mc) can be used in combination with two or more kinds.

The (meth)acrylic monomer (Ma) except for the metal-containing acrylic monomer (Mc) is preferably a (meth)acrylate monomer with a high polarity and is more preferably methyl (meth)acrylate or ethyl (meth)acrylate because it becomes possible to adjust a solubility to seawater and a strength of the paint film.

Examples of non-acrylic monomer (Mb) except for the metal-containing non-acrylic monomer (Md) include:
heterocyclic basic monomers such as vinylpyrrolidone, vinylpyridine, and vinylcarbazole; and
vinyl monomers such as styrene, vinyltoluene, α-methylstyrene, (meth)acrylonitrile, vinyl acetate, and vinyl propionate. The non-acrylic monomer (Mb) except for the metal-containing non-acrylic monomer (Md) can be used in combination with two or more kinds.

Examples of metal-containing acrylic monomer (Mc) include:
metal saturated aliphatic carboxylate (meth)acrylates such as magnesium acetate (meth)acrylate, zinc acetate (meth)acrylate, copper acetate (meth)acrylate, magnesium monochloroacetate (meth)acrylate, zinc monochloroacetate (meth)acrylate, copper monochloroacetate (meth)acrylate, magnesium monofluoroacetate (meth)acrylate, zinc monofluoroacetate (meth)acrylate, copper monofluoroacetate (meth)acrylate, magnesium propionate (meth)acrylate, zinc propionate (meth)acrylate, copper propionate (meth)acrylate, magnesium caproate (meth)acrylate, zinc caproate (meth)acrylate, copper caproate (meth)acrylate, magnesium caprylate (meth)acrylate, zinc caprylate (meth)acrylate, copper caprylate (meth)acrylate, magnesium 2-ethylhexanoate (meth)acrylate, zinc 2-ethylhexanoate (meth)acrylate, copper 2-ethylhexanoate (meth)acrylate, magnesium caprate (meth)acrylate, zinc caprate (meth)acrylate, copper caprate (meth)acrylate, magnesium versatate (meth)acrylate, zinc versatate (meth)acrylate, copper versatate (meth)acrylate, magnesium isostearate (meth)acrylate, zinc isostearate (meth)acrylate, copper ispostearate (meth)acrylate, magnesium palmitate (meth)acrylate, zinc palmitate (meth)acrylate, copper palmitate (meth)acrylate, magnesium cresotinate (meth)acrylate, zinc cresotinate (meth)acrylate, and copper cresotinate (meth)acrylate;
metal aromatic carboxylate (meth)acrylates such as magnesium benzoate (meth)acrylate, zinc benzoate (meth)acrylate, copper benzoate (meth)acrylate, magnesium 2,4,5-trichlorophenoxyacetate (meth)acrylate, zinc 2,4,5-trichlorophenoxyacetate (meth)acrylate, copper 2,4,5-trichlorophenoxyacetate (meth)acrylate, magnesium 2,4-dichlorophenoxyacetate (meth)acrylate, zinc 2,4-dichlorophenoxyacetate (meth)acrylate, copper 2,4-dichlorophenoxyacetate (meth)acrylate, magnesium quinoline carboxylate (meth)acrylate, zinc quinoline carboxylate (meth)acrylate, copper quinoline carboxylate (meth)acrylate, magnesium nitrobenzoate (meth)acrylate, zinc nitrobenzoate (meth)acrylate, copper nitrobenzoate (meth)acrylate, magnesium nitronaphthalene carboxylate (meth)acrylate, zinc nitronaphthalene carboxylate (meth)acrylate, copper nitronaphthalene carboxylate (meth)acrylate, magnesium pyruvate (meth)acrylate, zinc pyruvate (meth)acrylate, and copper pyruvate (meth)acrylate;
metal di(meth)acrylate monomers such as magnesium di(meth)acrylate, zinc di(meth)acrylate, and copper di(meth)acrylate; and
metal unsaturated carboxylate (meth)acrylates such as magnesium oleate (meth)acrylate, zinc oleate (meth)acrylate, copper oleate (meth)acrylate, magnesium elaidate (meth)acrylate, zinc elaidate (meth)acrylate, copper elaidate (meth)acrylate, magnesium linoleate (meth)acrylate, zinc linoleate (meth)acrylate, copper linoleate (meth)acrylate, magnesium linolenate (meth)acrylate, zinc linolenate (meth)acrylate, copper linolenate (meth)acrylate, magnesium stearolate (meth)acrylate, zinc stearolate (meth)acrylate, copper stearolate (meth)acrylate, magnesium ricinoleate (meth)acrylate, zinc ricinoleate (meth)acrylate, copper ricinoleate (meth)acrylate, magnesium ricinoelaidate (meth)acrylate, zinc ricinoelaidate (meth)acrylate, copper ricinoelaidate (meth)acrylate, magnesium brassidate (meth)acrylate, zinc brassidate (meth)acrylate, copper brassidate (meth)acrylate, magnesium erucate (meth)acrylate, zinc erucate (meth)acrylate, copper erucate (meth)acrylate, magnesium α-naphthoate (meth)acrylate, zinc α-naphthoate (meth)acrylate, copper α-naphthoate (meth)acrylate, magnesium β-naphthoate (meth)acrylate, zinc β-naphthoate (meth)acrylate, and copper β-naphthoate (meth)acrylate. The metal-containing acrylic monomer (Mc) can be used in combination with two or more kinds.

The metal-containing acrylic monomer (Mc) is preferably a metal di(meth)acrylate monomer. The use of the metal di(meth)acrylate monomer results in extremely improving the strength of the paint film due to the three-dimensional cross-linked structure of the polymer and effectively developing a long-term antifouling effect by stably hydrolyzing the bivalent metal ester structure in seawater to elute the surface of the paint film.

Note that, when the metal-containing acrylic monomer (Mc) is copolymerized, the amount of the monomer used is preferably 1 to 60 parts by mass with respect to 100 parts by mass of the copolymerization monomer in total, is more preferably 5 to 50 parts by mass, and 10 to 40 parts by mass.

Examples of the metal-containing non-acrylic monomer (Md), metal diunsaturated carboxylates such as magnesium dioleate, zinc dioleate, copper dioleate, magnesium dielaidate, zinc dielaidate, copper dielaidate, magnesium dilinoleate, zinc dilinoleate, copper dilinoleate, magnesium dilinolenate, zinc dilinolenate, copper dilinolenate, magnesium distearolate, zinc distearolate, copper distearolate, magnesium diricinoleate, zinc diricinoleate, copper diricinoleate, magnesium diricinoelaidate, zinc diricinoelaidate, copper diricinoelaidate, magnesium dibrassidate, zinc dibrassidate, copper dibrassidate, magnesium dierucate, zinc dierucate, copper dierucate, magnesium di-α-naphthoate, zinc di-α-naphthoate, copper di-α-naphthoate, magnesium di-β-naphthoate, zinc di-p-naphthoate, and copper di-β-naphthoate. The metal-containing non-acrylic monomer (Md) can be used in combination with two or more kinds.

Note that, metal-containing acrylic polymer (Pm) may be a polymer obtained by a method in which (meth)acrylic acid is homopolymerized or copolymerized and thereafter it is esterified using an oxide, a hydroxide or a salt of a bivalent metal, but is preferably a polymer obtained by copolymerizing the metal-containing acrylic monomer (Mc) and a non-metal-containing acrylic monomer.

The acrylic polymer (P) which does not have a bivalent metal ester structure (hereinafter, also referred to as "non-metal-containing acrylic polymer (Pn)") is a control polymer and is obtained by copolymerizing 50 parts by mass or more of a (meth)acrylic monomer with a carbon number of the ester part of 1 to 4 out of (meth)acrylic monomers (Ma) with respect to 100 parts by mass of the copolymerization monomer in total. Since the polymer has a relatively high solubility to seawater, it results in effectively developing a long-term antifouling effect by eluting the surface of the paint film.

The acid value of acrylic polymer (P) is preferably 25 mgKOH/g or more. The acid value as used herein refers to an acid value with respect to the solid portion of acrylic polymer (P). It covers not only a case in which hydrogen is bonded to a terminal in the acid group of acrylic polymer (P), but also a case in which a metal salt is made. The acid value of acrylic polymer (P) can be evaluated by a calculation or by a measurement of the acid value described later. From the viewpoint of developing a good solubility, the acid value of acrylic polymer (P) is more preferably 40 mgKOH/g or more, and is most preferably 60 mgKOH/g or more.

Also, the content of the carboxyl group (represented by -COOH, except for a case of a metal salt) in acrylic polymer (P) is preferably 1.5 mol/kg or less, and is more preferably 0.3 mol/kg or less. When the content of the carboxyl group in acrylic polymer (P) is 1.5 mol/kg or less, thee paint film comes to have a good water resistance and also comes to have a good storage stability. The content of the carboxyl group in acrylic polymer (P) is evaluated by a calculation.

The weight average molecular weight of acrylic polymer (P) is preferably 30,000 or less, is more preferably 15,000 or less, and is further preferably 7,000 or less. When the weight average molecular weight of acrylic polymer (P) is 30,000 or less, the paint comes to have a low viscosity as the coating lowers, and easily becomes a high solid type. In particular, acrylic polymer (Pm) has a good hydrolyzability and can be applied to an antifouling paint.

### (Radical polymerizable monomer (M))

As the radical polymerizable monomer (M), the above-mentioned (meth)acrylic monomer (Ma) or non-acrylic monomer (Mb) can be used.

As the radical polymerizable monomer (M), only acrylic monomer (Ma) except for the metal-containing acrylic monomer (Mc) can be used, and only metal-containing acrylic monomer (Mc) can be used, but it is preferable to use both together. In this case, the amount of metal-containing acrylic monomer (Mc) used is preferably 10 to 90 parts by mass with respect to 100 parts by mass of the radical polymerizable monomer (M) in total, is more preferably 20 to 80 parts by mass, and is further preferably 30 to 70 parts by mass.

The compounding ratio of acrylic polymer (P) and the radical polymerizable monomer (M) can appropriately be selected depending on the polymerizability of radical polymerizable monomer (M). However, from the viewpoint of improving the self-abradability of the paint film formed, the mass ratio of acrylic polymer (P) / radical polymerizable monomer (M) is preferably 30/70 to 95/5, is more preferably 50/50 to 90/10, and is further preferably 60/40 to 85/15. The mass of acrylic polymer (P) as used herein is the mass of the solid portion of the polymer except for the organic solvent.

The amount of the metal contained in the total mass of acrylic polymer (P) and radical polymerizable monomer (M) is 2 to 40 mass%, is more preferably 3 to 30 mass%, and is further preferably 4 to 25 mass%. When the amount of the metal is 2 mass% or more, a good self-abradability can be obtained. When the amount of the metal is 40 mass% or less, a crack of the paint film comes to be hardly generated. The mass of acrylic polymer (P) as used herein is the mass of the solid portion of the polymer except for the organic solvent.

### (Organic peroxide (O))

The organic peroxide (O) is an organic compound having an -O-O-bond, and it is decomposed to generate a free radical. By this free radical, a radical polymerization of radical polymerizable monomer (M) occurs.

Examples of organic peroxide (O) include:
hydroperoxides such as diisopropylbenzene hydroperoxide, 1,1,3,3-tetramethylbutyl hydroperoxide, cumene hydroperoxide, and t-butyl hydroperoxide;
dialkyl peroxides such as di(2-t-butylperoxylisopropyl)benzene, dicumyl peroxide, 2,5-dimethyl-2,5-di(t-butylperoxy)hexane, t-butyl cumyl peroxide, di-t-hexyl peroxide, di-t-butyl peroxide, and 2,5-dimethyl-2,5-di(t-butylperoxy)hexyne-3;
diacyl peroxides such as diisobutyryl peroxide, di(3,5,5-trimethylhexanonyl) peroxide, dilauroyl peroxide, disuccinic acid peroxide, dibenzoyl peroxide, di(3-methylbenzoyl) peroxide, benzoyl(3-methylbenzoyl) peroxide, and di(4-methylbenzoyl) peroxide; and
ketone peroxides such as methyl ethyl ketone peroxide, cyclohexane peroxide, and acetylacetone peroxide. The organic peroxide (O) can be used in combination with two or more kinds.

The compounding amount of organic peroxide (O) can appropriately be selected depending on the polymerizability of radical polymerizable monomer (M). However, from the viewpoint of preventing the tack of the paint film formed, it is preferably 0.1 to 10 parts by mass with respect to 100 parts by mass of acrylic polymer (P), the radical polymerizable monomer (M) and the solvent in total, is more preferably 0.5 to 8 parts by mass, and is further preferably 1 to 6 parts by mass. When the compounding amount of organic peroxide (O) is 0.1 part by mass or more, the curability tends to become good. When it is 10 parts by mass or less, the paint workability of the antifouling paint composition and the various properties of the paint film formed tend to be improved.

### (Decomposition accelerator (A))

A decomposition accelerator (A) is preferably compounded to the antifouling paint composition for promoting the decomposition of organic peroxide (O). By the acting of this decomposition accelerator (A), the organic peroxide (O) can be decomposed at normal temperature (e.g. 20°C) to promote the radical polymerization of radical polymerizable monomer (M).

Examples of decomposition accelerator (A) include:
aromatic tertiary amines such as N,N-substituted-p-toluidines such as N,N-dimethyl-p-toluidine, N,N-diethyl-p-toluidine, N,N-diethylaniline, N-(2-hydroxyethyl)-N-methyl- p-toluidine, N,N-bis(2-hydroxyethyl)-p-toluidine or
adducts thereof with ethylene oxide or propylene oxide, and N,N-bis(2-hydroxypropyl)-p-toluidine or adducts thereof with ethylene oxide or propylene oxide; 4-(N,N-substituted amino)benzaldehydes such as 4-(N,N-dimethylamino)benzaldehyde, 4-[N, N-bis(2-hydroxyethyl]amino]benzaldehyde,
and 4-(N-methyl-N-hydroxyethylamino)benzaldehyde; and N,N-substituted anilines such as N,N-dimethylaniline, N,N-bis(hydroxyethyl)aniline, and diethanolaniline;
Other amines such as aniline, p-toluidine, N-ethyl-m-toluidine, triethanolamine, m-toluidine, diethylenetriamine, pyridine, phenyl morpholine, and piperidine; thiourea compounds such as methylthiourea, diethylthiourea, acetylthiourea, tetramethylthiourea, and ethylenetiourea; and
metal salts such as cobalt naphthenate, copper naphthenate, manganese naphthenate, nickel naphthenate, vanadyl acetylacetonato, and titanium acetylacetonate. The decomposition accelerator (A) can be used in combination with two or more kinds.

Among these, an aromatic tertiary amine is preferable. The aromatic tertiary amine is preferably a compound in which at least one aromatic residue is directly bonded to nitrogen atom. Examples of the aromatic tertiary amine include N,N-dimethyl-p-toluidine, N,N-diethyl-p-toluidine, N,N-diethylaniline, N-(2-hydroxyethyl)N-methyl-p-toluidine, N,N-bis(2-hydroxyethyl)-p-toluidine, and N,N-bis(2-hydroxypropyl)-p-toluidine; and adducts of N,N-bis(2-hydroxyethyl)-p-toluidine or N,N-bis(2-hydroxypropyl)-p-toluidine with ethylene oxide or propylene oxide. Also, the aromatic tertiary amine is not limited to a p(para)-compound, but may be an o(ortho)- compound or a m(meta)- compound. From the view point of reactivity and curability of the antifouling paint composition, N,N-dimethyl-p-toluidine, N,N-diethyl-p-toluidine, N,N-bis(2-hydroxyethyl)-p-toluidine, and N,N-bis(2-hydroxypropyl)-p-toluidine are preferable.

From the viewpoint of the balance between the curability and the pot life (workability) and the life, the amount of the amine added as decomposition accelerator (A) is preferably 0.01 to 10 parts by mass with respect to 100 parts by mass of the solid portion of acrylic polymer (P) and monomer portion of radical polymerizable monomer (M) in total, is more preferably 0.1 to 8 parts by mass, and is particularly preferably 0.2 to 6 parts by mass. An antifouling paint composition having a suitable usable time can be obtained by setting the amount of the amine added as decomposition accelerator (A) to be 10 parts by mass or less.

The amount of the thiourea compound or the metal salt added as decomposition accelerator (A) is preferably 0.01 to 5 parts by mass with respect to 100 parts by mass of the solid portion of acrylic polymer (P) and monomer portion of radical polymerizable monomer (M) in total, and is more preferably 0.1 to 4 parts by mass.

The decomposition accelerator may be added just before the antifouling paint composition is cured, and may preliminarily be added to the antifouling paint composition.

It is preferable that the amounts of organic peroxide (O) and decomposition accelerator (A) added are appropriately adjusted so that the antifouling paint composition comes to have a usable time of 5 to 120 minutes.

### (Other component)

Also, for the purpose of improving the storage stability of the antifouling paint composition of the present invention, an polymerization inhibitor such as hydroquinone, hydroquinone monomethyl ether, or 2,4-dimethyl-t-butylphenol can be added.

An antifouling agent can be compounded to the antifouling paint composition depending on the required performance. Examples of the antifouling agent include copper antifouling agents such as copper suboxide, copper thiocyanate, and copper powders; other metal compounds such as lead, zinc, and nickel; amine derivatives such as diphenylamine; nitryl compounds, benzothiazole compounds, maleimide compounds, and pyridine compound.

In particular, it is preferably a compound selected by the Shipbuilders' Association of Japan or the like. Specifically, it is preferably selected from manganese ethylenebisdithiocarbamate, zinc dimethtyldithiocarbamate, 2-methylthio-4-t-butylamino-6-cyclopropylamino-s-triazine, 2,4,5,6-tetrachloroisophthalonitrile, N,N-dimethyldichlorophenyl urea, zinc ethylenebisdithiocarbamate, copper rhodanide, 4,5-dichloro-2-n-octyl-3(2H)isothiazolone, N-(fluorodichloromethylthio)phthalimide, N,N'-dimethyl-N'-phenyl-(N-fluorodichloromethylthio)sulfamide, 2-pyridinethiol-1-oxide zinc salt, tetramethylthiuram disulfide, Cu-10%Ni solid solution alloy, 2,4,6-trichlorophenylmaleimide, 2,3,5,6-tetrachloro-4-(methylsulfonyl)pyridine, 3-iodo-2-propynylbutylcarbamate, diiodomethyl para-tolyl sulfone, bisdimethyldithiocarbamoyl zinc ethylenebisdithiocarbamate, phenyl(bispyridyl) bismuth dichloride, 2-(4-thiazolyl)-benzimidazole, and pyridine-triphenylborane.

Also, when a transition metal compound such as copper suboxide is used as the antifouling agent, the curing progresses even if the decomposition accelerator (A) is not compounded. This is thought to be because the function as the decomposition accelerator is realized by the acting of at least one of acrylic polymer (P) and radical polymerizable monomer (M) with a bivalent metal ester. Therefore, from the viewpoint of compensating for the function of decomposition accelerator (A), it is preferable to use a transition metal compound such as copper suboxide as the antifouling agent.

The antifouling agent can be used in combination with two or more kinds.

The compounding amount of the antifouling agent can appropriately be selected depending on the desired antifouling property. However, from the viewpoint of effectively developing the antifouling property, it is preferably 0.1 to 500 parts by mass with respect to 100 parts by mass of the solid portion of acrylic polymer (P) and the monomer portion of radical polymerizable monomer (M) in total, and is more preferably 5 to 350 parts by mass.

For the purpose of preventing the inhibition effect of oxygen in the surface of the paint film and of improving the water resistance, wax (c) having a melting point of 40°C or higher can be compounded to the antifouling paint composition. Examples of wax (c) include paraffin wax, polyethylene wax, and higher fatty acids such as stearic acid. It can also be used in combination with two or more kinds which have a different melting point.

The amount of wax (C) used is preferably 0.1 to 5 parts by mass with respect to 100 parts by mass of the solid portion of acrylic polymer (P) and the monomer portion of radical polymerizable monomer (M) in total, and is more preferably 0.2 to 2 parts by mass. A large amount of wax (C) used may damage the surface of the paint film.

For the purpose of providing the lubricity to the surface of the paint film and of preventing the adherence of the organism, it is possible to compound a silicon compound such as dimethylpolysiloxane or a silicone oil, a fluorine-containing compound such as a fluorocarbon, or the like. Further, as necessary, it is possible to compound an extender pigment, a color pigment, a plasticizer, an additive for various paintings, another resin, or the like.

The antifouling paint composition can be diluted with an organic solvent as necessary to be used as the antifouling paint.

### <Antifouling paint film and production method of the same>

The antifouling paint film of the present invention can be obtained by decomposing an organic peroxide (O) in a state where an antifouling paint composition which comprises an acrylic polymer (P), a radical polymerizable monomer (M) and an organic peroxide (O) is applied on a substrate. In this case, at least one of the acrylic polymer (P) and the radical polymerizable monomer (M) has a bivalent metal ester structure. Specifically, an antifouling paint containing the above-mentioned antifouling paint composition is applied to a substrate that is a material to be painted, and the applied film obtained is dried at a temperature equal to or higher than the decomposition temperature of organic peroxide (O) and the radical polymerizable monomer (M) is also polymerized by the decomposition of organic peroxide (O), to obtain an antifouling paint film. If the decomposition temperature of organic peroxide (O) is lower than room temperature, the film can be dried at room temperature. In the case of adding the decomposition accelerator (A), the film can be dried at a temperature equal to or lower than the decomposition temperature if it is a temperature at which the decomposition of organic peroxide (O) occurs. The antifouling paint composition is preferably mixed just before the application.

The mixing method is preferably a method in which the acrylic polymer (P) / radical polymerizable monomer (M) mixture is prepared and the organic peroxide (O) is added just before application. Also, the radical polymerizable monomer (M) / organic peroxide (O) mixture may be mixed to the acrylic polymer (P), and the acrylic polymer (P) / organic peroxide (O) mixture may be mixed to the radical polymerizable monomer (M). As for the acrylic polymer (P) and the radical polymerizable monomer (M), a mixture respectively with a solvent is preferably used. However, as for the acrylic polymer (P), a powder may be used.

When a paint film is formed (coated) using an antifouling paint, the above-mentioned antifouling paint can be applied directly on a surface of substrates such as ships, various fishnets, seaport facilities, oil fences, bridges and underwater structures such as sea bottom bases, or on a paint film obtained by applying a primer such as a wash primer, a chlorinated rubber or an epoxy, or an middle coat paint on the substrates, by a method of brush application, spray application, roller application, dipping application, or the like. The application amount is generally an amount so that the thickness of the dried paint film comes to be 50 to 400 µm. The drying of the paint film is generally carried out at room temperature, but the drying by heating may be carried out.

### EXAMPLE

As follows, the present invention is explained by the Examples in detail. In the Examples, "part(s)" means "part(s) by mass" and "%" means "mass%".

### <Production Example 1: a solution of metal-containing acrylic monomer (Mc1)>

66.3 parts of PGM (propylene glycol methyl ether) and 41 parts of zinc oxide were supplied to a four-necked flask having a cooler, a thermometer, a dropping funnel and a stirrer, and the temperature is raised to 75°C with stirring. Subsequently, a mixture consisting of 43 parts of methacrylic acid, 36 parts of acrylic acid and 5 parts of water was dropped from the dropping funnel for 3 hours. After it was further stirred for 2 hours, 10 parts of PGM was added to obtain a solution of metal-containing acrylic monomer (Mc1). The monomer ratio was 54.8 %. Here, the monomer ratio means the weight ratio of metal-containing acrylic monomer (Mc1) which is contained in the solution.

### <Production Example 2: a solution of metal-containing acrylic monomer (Mc2)>

58.7 parts of PGM and 41 parts of zinc oxide were supplied to a four-necked flask having a cooler, a thermometer, a dropping funnel and a stirrer, and the temperature is raised to 75°C with stirring. Subsequently, a mixture consisting of 39 parts of methacrylic acid, 32 parts of acrylic acid, 28 parts of oleic acid and 24.6 parts of xylene was dropped from the dropping funnel for 3 hours. After it was further stirred for 2 hours, 15 parts of PGM was added to obtain a solution of metal-containing acrylic monomer (Mc2). The monomer ratio was 54.9 %.

### <Production Example 3: a solution of metal-containing non-acrylic monomer (Md1)>

50 parts of PGM, 100 parts of xylene, 283 parts of oleic acid and 41 parts of zinc oxide were supplied to a four-necked flask having a cooler, a thermometer, a dropping funnel and a stirrer, and the temperature is raised to 85°C with stirring and it was stirred at 85°C for 3 hours. After it was further stirred for 2 hours, 50 parts of PGM was added to obtain a solution of metal-containing non-acrylic monomer (Md1). The monomer ratio was 60.2 %.

### <Production Example 4: a solution of metal-containing acrylic polymer (Pm1)>

10 parts of PGM, 47.1 parts of xylene and 4 parts of ethyl acrylate were supplied to a four-necked flask having a cooler, a thermometer, a dropping funnel and a stirrer, and the temperature is raised to 100°C with stirring. Subsequently, a mixture consisting of 10 parts of methyl methacrylate, 62.6 parts of ethyl acrylate, 5.4 parts of 2-methoxyethyl acrylate, 32.7 parts (monomer ratio: 18 parts) of a solution of metal-containing monomer (Ma1) obtained in Production Example 1, 1 part of a chain transfer agent (made by NOF CORPORATION, trade name: Nofmer MSD), 2.5 parts of AIBN (2,2'-azobis(isobutyronitrile)) and 5.5 parts of AMBN (2,2'-azobis(2-methylbutyronitrile)) was dropped from the dropping funnel for 6 hours. After finishing the dropping, a mixture of 0.5 parts of t-butyl peroctoate and 5 parts of xylene was further dropped for 30 minutes. After it was further stirred for 1 hour and 30 minutes, 5 parts of xylene was added to obtain metal-containing acrylic polymer (Pm1) with a solid ratio of 56.0 %, a Gardner viscosity of Z6, an acid value of 84.5 mgKOH/g and a weight average molecular weight of 4,300.

### <Production Example 5: a solution of metal-containing acrylic polymer (Pm2)>

Metal-containing acrylic polymer (Pm2) with a solid ratio of 56.0 %, a Gardner viscosity of +Z4, an acid value of 77.2 mgKOH/g and a weight average molecular weight of 5,300 was obtained in the same manner as in Production Example 4 except that a solution of metal-containing monomer (Ma2) was used instead of a solution of metal-containing monomer (Ma1).

### <Production Example 6: a solution of metal-containing acrylic polymer (Pm3)>

10 parts of PGM, 47.1 parts of xylene and 4 parts of ethyl acrylate were supplied to a four-necked flask having a cooler, a thermometer, a dropping funnel and a stirrer, and the temperature is raised to 100°C with stirring. Subsequently, a mixture consisting of 11.4 parts of methyl methacrylate, 72.0 parts of ethyl acrylate, 6.2 parts of 2-methoxyethyl acrylate, 11.6 parts (monomer ratio: 6.4 parts) of a solution of metal-containing monomer (Ma1) obtained in Production Example 1, 9.5 parts of xylene, 1 part of a chain transfer agent (made by NOF CORPORATION, trade name: Nofmer MSD), 2.5 parts of AIBN (2,2'-azobis(isobutyronitrile)) and 2 parts of AMBN (2,2'-azobis(2-methylbutyronitrile)) was dropped at a constant speed from the dropping funnel for 6 hours. After finishing the dropping, a mixture of 0.5 parts of t-butyl peroctoate and 5 parts of xylene was further dropped for 30 minutes. After it was further stirred for 1 hour and 30 minutes, 5 parts of xylene was added to obtain metal-containing acrylic polymer (Pm3) with a solid ratio of 55.5 %, a Gardner viscosity of Z3, an acid value of 30.2 mgKOH/g and a weight average molecular weight of 9,000.

### <Production Example 7 (control): a solution of non-metal-containing acrylic polymer (Pn1)>

10 parts of PGM and 48.8 parts of xylene were supplied to a four-necked flask having a cooler, a thermometer, a dropping funnel and a stirrer, and the temperature is raised to 100°C with stirring. Subsequently, a mixture of 10.6 parts of methyl methacrylate, 70.3 parts of ethyl acrylate, 5.7 parts of 2-methoxyethyl acrylate, 7.3 parts of methacrylic acid, 6.1 parts of acrylic acid, 13 parts of xylene, 2.5 parts of AIBN and 4 parts of AMBN was dropped from the dropping funnel for 6 hours. After finishing the dropping, a mixture of 0.5 parts of t-butyl peroctoate and 5 parts of xylene was further dropped for 30 minutes. After it was further stirred for 1 hour and 30 minutes, 5 parts of xylene was added to obtain non-metal-containing acrylic polymer (Pn1) with a solid ratio of 55.4 %, a Gardner viscosity of N, an acid value of 94.8 mgKOH/g and a weight average molecular weight of 6,500.

Note that, as the acid value (mgKOH/g) of acrylic polymer (P), the weight of the potassium hydroxide which is required for neutralizing the acrylic polymer with a solid abount of 1 g was measured. The weight average molecular weight of acrylic polymer (P) was estimated with GPC (made by TOSOH CORPORATION, HLC-8120GPC (trade name), two column TSK-gel α type (α-M) made by TOSOH CORPORATION, eluent: dimethylformamide). The compositions and properties of acrylic polymers (P) were shown in TABLE 1.

### TABLE 1

**Table 1**

| | | Metal-containing Acrylic Polymer (Pm1) | Metal-containing Acrylic Polymer (Pm2) | Metal-containing Acrylic Polymer (Pm3) | Non-metal-containing Acrylic Polymer (Pn1) |
|---|---|---|---|---|---|
| Metal-containing Acrylic Monomer (Mc1) upper column: Compounding Amount lower column: Monomer Ratio | | 18 (32.7) | - | 6.4 (11.6) | - |
| Metal-containing Acrylic Monomer (Mc2) upper column: Compounding Amount lower column: Monomer Ratio | | - | 18 (32.7) | - | - |
| Non-metal-containing Acrylic Monomer (Ma) | EA | 66.6 | 66.6 | 76.0 | 70.3 |
| | MMA | 10.0 | 10.0 | 11.4 | 10.6 |
| | 2-MTA | 5.4 | 5.4 | 6.2 | 5.7 |
| | MAA | - | - | - | 7.3 |
| | AA | - | - | - | 6.1 |
| Solid Ratio (%) | | 56.0 | 56.0 | 55.5 | 55.4 |
| Gardner Viscosity | | Z6 | +Z4 | Z3 | N |
| Acid Value (mgKOH/g) | | 84.5 | 77.2 | 30.2 | 94.8 |
| Weight Average Molecular Weight | | 4300 | 5300 | 9000 | 6500 |

### <Examples 1 to 13 and Comparative Examples 1 to 2>

The radical polymerizable monomer (M) and the acrylic polymer (P) were mixed at a compounding ratio shown in TABLE 2. After that, a decomposition accelerator was added at 20°C at a compounding ratio shown in TABLE 2, and the organic peroxide (O) was successively added to prepare a antifouling paint composition so that the theoretical solid ratio of the paint came to be 50 to 60 %. Here, the theoretical solid ratio means the mass ratio of radical polymerizable monomer (M) and the acrylic polymer (P) which are contained in the antifouling paint composition. And, the antifouling paint composition obtained was promptly applied on a predetermined substrate, and it was dried at room temperature for 48 hours to obtain a paint film with a dry thickness of approximately 180 µm. The following measurements and evaluations for the antifouling paint composition and the paint film were conducted.

### (1) Viscosity of the antifouling paint composition

The viscosity of an antifouling paint composition was measured with a rotating B type viscometer using a rotor of No 2 to 4. The result was shown in TABLE 2.

### (2) Gelation time of the antifouling paint composition

50 g of an antifouling paint composition was weighed and was stirred at room temperature, and the time before the flowability of the antifouling paint composition disappeared was measured. The result was shown in TABLE 2.

### (3) Transparency of the paint film

A paint film was formed on a glass plate, and the transparency of the paint film was observed by visual inspection and was evaluated by the following criteria. The result was shown in TABLE 2.
○: It is transparent.
Δ: There is a little turbidness.
x: There is turbidness, but there is no precipitate.
× × : There is turbidness, and there is also precipitate.

### (4) Xylol rubbing resistance of the paint film

A paint film was formed on a sandblasted steel plate on which an antirust paint was previously applied, and a rubbing to the surface of paint film was carried out using a gauze dipped into xylene with a load of 500 g. And, the reciprocating number of time before the paint film was dissolved and the sandblasted steel plate was exposed was counted. The result was shown in TABLE 2.

### (5) Grid detaching property of the paint film

A paint film was formed on a sandblasted steel plate on which an antirust paint was previously applied and the test piece obtained was immersed in filter-sterilized seawater, and it was then dried at 20°C for 1 week. And, a crosscut to reach the substrate was made on the paint film at 2 mm intervals to prepare 25 grids of 2 mm². A cellophane tape was attached thereon and it was then rapidly detached. The situation was observed by visual inspection and was evaluated by the following criteria. The result was shown in TABLE 2. ⊚: There is not at all observed a detachment of the grid and a peeling at the corner of the grid.
○: There is not a detachment of the grid but there is a peeling at the corner of the grid.
Δ: 1 to 12 grids were detached.
× : 13 to 25 grids were detached.

### (6) Consumed degree test of the paint film

A paint film was formed on a rigid polyvinyl chloride plate of 50 mm × 50 mm × 2 mm (thickness) and the test piece obtained was attached to a rotary drum placed in seawater. And, it was rotated at a circumferential speed of 7.7 m/s (15 knots), and the thickness of the consumed film after 1 month and 3 months was measured. The result was shown in TABLE 2.

### (7) Water resistance of the paint film

A paint film was formed on a sandblasted steel plate on which an antirust paint was previously applied and the test piece obtained was immersed in artificial seawater for 1 month and 3 months, and it was then dried at 20°C for 1 week. And, the surface of the paint film was observed and was evaluated by the following criteria. The result was shown in TABLE 2.
⊚: There is not at all observed a crack and a detachment.
○: There is observed a slight crack.
Δ: There is observed a crack and a detachment in a partial area.
× : There is observed a crack and a detachment in a whole area.

The antifouling paint compositions obtained in Examples 1 to 13 had a viscosity suitable for the painting even if the solid ratio was 50 % or higher. Also, it had an excellent water resistance in seawater, and the self-abradability and the grid detaching test (adhesion) as well as the antifouling property were also good.

On the other hand, the composition of Comparative Example 1 which did not contain the radical polymerizable monomer (M) had an extremely high viscosity, and it was difficult to adapt it to a high solid type of the paint. The composition of Comparative Example 2 which does not contain the acrylic polymer (P) had a low viscosity, but the grid detaching test and the water resistance were low.

### TABLE 2

**Table 2**

| | | | | Example | | | | | | | | | | | | | Comparative Example | |
|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 1 | 2 |
| Acrylic Polymer (P) | Metal-containing Acrylic Polymer (Pm1) | | | 85 (154.5) | 70 (127.3) | 70 (127.3) | - | - | - | - | - | - | - | - | - | - | 100 (181.8) | - |
| upper column: | Metal-containing Acrylic Polymer (Pm2) | | | - | - | - | 60 (109.1) | 90 (163.6) | 80 (145.5) | - | - | 70 (127.3) | 70 (127.3) | - | 70 (127.3) | - | - | - |
| Solid Amount | Metal-containing Acrylic Polymer (Pm3) | | | - | - | - | - | - | - | - | - | - | - | - | - | 70 (127.3) | - | - |
| lower column: | Non-metal-containing Acrylic Polymer (Pn1) | | | - | - | - | - | - | - | 70 (127.3) | 50 (90.9) | - | - | 50 (90.9) | - | - | - | - |
| Compounding Amount | | | | | | | | | | | | | | | | | | |
| Radical Polymerizable Monomer (M) | Methyl Methacrylate (Ma1) | | | - | - | - | 20 | - | 20 | 18 | - | - | - | - | - | - | - | 30 |
| upper column: | Metal-containing Acrylic Monomer (Mc1) | | | 15 (27.3) | 30 (54.5) | - | 20 (36.4) | - | - | 12 (21.8) | 50 (90.9) | - | - | 50 (90.9) | - | 30 (54.5) | - | 70 (127.3) |
| Solid Amount | Metal-containing Acrylic Monomer (Mc2) | | | - | - | 30 (54.5) | - | - | - | - | - | 30 (54.5) | 30 (54.5) | - | 30 (54.5) | - | - | - |
| lower column: | Metal-containing Non-acrylic Monomer (Md1) | | | - | - | - | - | 10 (16.7) | - | - | - | - | - | - | - | - | - | - |
| Compounding Amount | | | | | | | | | | | | | | | | | | |
| Organic Peroxide (O) | Benzoyl Peroxide (50%) | | | 3.64 | 3.64 | 3.64 | 3.31 | 3.64 | 3.31 | 3.34 | 3.64 | 0.36 | 1.82 | 10.91 | - | 3.64 | 3.64 | 3.15 |
| | PERCUMYL H80 (®, made by NOF CORPORATION) | | | - | - | - | - | - | - | - | - | - | - | - | 3.64 | - | - | - |
| Decomposition Accelerator (A) | Dimethyl-para-toluidine | | | 1.45 | 1.45 | 1.45 | 1.32 | 1.45 | 1.32 | 1.34 | 1.45 | 0.15 | 0.73 | 4.36 | - | 1.45 | 1.45 | 1.26 |
| | Cobalt Naphthenate | | | - | - | - | - | - | - | - | - | - | - | - | 1.82 | - | - | - |
| Wax (C) | Paraffin Wax (melting point: 47°C) | | | - | - | - | - | - | - | - | - | - | - | - | 0.50 | - | - | - |
| Organic Solvent | Propylene Glycol Monomethyl Ether | | | 7 | - | - | 15 | 18 | 15 | 15 | - | - | - | - | - | - | - | 25 |
| Properties of Antifouling Paint Composition | Solid Amount of Resin in Total (Compounding Amount in Total) | | | 100 (188.8) | 100 (181.8) | 100 (181.8) | 100 (180.5) | 100 (198.3) | 100 (180.5) | 100 (182.1) | 100 (181.8) | 100 (181.8) | 100 (181.8) | 100 (181.8) | 100 (181.8) | 100 (181.8) | 100 (181.8) | 100 (182.3) |
| | Theoretical Solid Ratio of Paint (%) | | | 53.0 | 55.0 | 55.0 | 55.4 | 50.4 | 55.4 | 54.9 | 55.0 | 55.0 | 55.0 | 55.0 | 55.0 | 55.0 | 55.0 | 54.9 |
| | Metal Amount of Polymer and Monomer (mass%) | | | 8.9 | 12.5 | 11.1 | 8.6 | 5.1 | 3.6 | 3.5 | 14.7 | 10.6 | 10.6 | 14.7 | 10.6 | 10.1 | 5.3 | 20.6 |
| | Viscosity (mPa·s) | | | 240 | 270 | 265 | 220 | 220 | 280 | 202 | 204 | 238 | 238 | 204 | 238 | 220 | 14800 | 2 |
| | Gelation Time (minute) | | | 100 | 70 | 70 | 50 | 100 | 80 | 70 | 50 | 120 | 90 | 20 | 120 | 80 | - | 8 |
| Evaluation Result | Transparency | | | ○ | ○ | ○ | ○ | ○ | ○ | ○ | ○ | ○ | ○ | ○ | ○ | ○ | ○ | ○ |
| | Xylol Rubbing Resistance (number of times) | | | 14 | 18 | 17 | 20 | 12 | 16 | 17 | 25 | 22 | 20 | 12 | 14 | 11 | 11 | 40 |
| | Consumed Degree Test | Consumed Thickness (µm) | After 1 Month | 40 | 61 | 64 | 36 | 30 | 22 | 10 | 53 | 45 | 52 | 69 | 53 | 21 | 38 | 55 |
| | | | After 3 Months | 85 | 128 | 82 | 58 | 49 | 40 | 19 | 95 | 74 | 89 | 127. | 87 | 38 | 79 | 89 |
| | | Monthly Average Consumed Thickness (µm) | | 28.3 | 42.7 | 27.3 | 19.3 | 16.3 | 13.3 | 6.3 | 31.7 | 24.7 | 29.7 | 42.3 | 29.0 | 12.7 | 26.3 | 29.7 |
| | Grid Detaching Property | | | ⊚ | ⊚ | ⊚ | ⊚ | ⊚ | ⊚ | ○ | ○ | ⊚ | ⊚ | ○ | ⊚ | ○ | ⊚ | × |
| | Water Resistance | | | ⊚ | ⊚ | ⊚ | ○ | ⊚ | ⊚ | ○ | ○ | ⊚ | ⊚ | Δ | ⊚ | ○ | ⊚ | × |

## Claims

1. An antifouling paint composition, comprising an acrylic polymer (P), a radical polymerizable monomer (M) and an organic peroxide (O), wherein the acrylic polymer (P) and optionally the radical polymerizable monomer (M) has a bivalent metal ester structure, and the amount of the metal contained in the total mass of acrylic polymer (P) and radical polymerizable monomer (M) is 2 to 40 mass%.

2. The antifouling paint composition according to claim 1, wherein the acrylic polymer (P) has an acid value of 25 mgKOH/g or more.

3. The antifouling paint composition according to claim 1 or 2, wherein the acrylic polymer (P) is obtained by polymerizing a radical polymerizable monomer having a bivalent metal ester structure.

4. The antifouling paint composition according to claim 1 or 2, further comprising a decomposition accelerator (A) for the organic peroxide (O).

5. The antifouling paint composition according to claim 3, further comprising a decomposition accelerator (A) for the organic peroxide (O).

6. A production method of an antifouling paint film, comprising decomposing an organic peroxide (O) in a state where an antifouling paint composition which comprises an acrylic polymer (P), a radical polymerizable monomer (M) and an organic peroxide (O) is applied on a substrate, wherein the acrylic polymer (P) and optionally the radical polymerizable monomer (M) has a bivalent metal ester structure, and the amount of the metal contained in the total mass of acrylic polymer (P) and radical polymerizable monomer (M) is 2 to 40 mass%.

7. An antifouling paint film obtained by the production method of claim 6.

## Patentansprüche

1. Antifouling-Farbzusammensetzung, umfassend ein Acrylpolymer (P), ein radikalisch polymerisierbares Monomer (M) und ein organisches Peroxid (O), wobei das Acrylpolymer (P) und wahlweise das radikalisch polymerisierbare Monomer (M) eine zweiwertige Metallesterstruktur aufweist, und wobei die Menge des in der gesamten Masse des Acrylpolymers (P) und des radikalisch polymerisierbaren Monomers (M) enthaltenen Metalls 2 bis 40 Masse-% beträgt.

2. Antifouling-Farbzusammensetzung nach Anspruch 1, wobei das Acrylpolymer (P) eine Säurezahl von 25 mgKOH/g oder mehr besitzt.

3. Antifouling-Farbzusammensetzung nach Anspruch 1 oder 2, wobei das Acrylpolymer (P) erhalten wird durch Polymerisieren eines radikalisch polymerisierbaren Monomers mit einer zweiwertigen Metallesterstruktur.

4. Antifouling-Farbzusammensetzung nach Anspruch 1 oder 2, weiterhin umfassend einen Zersetzungsbeschleuniger (A) für das organische Peroxid (O).

5. Antifouling-Farbzusammensetzung nach Anspruch 3, weiterhin umfassend einen Zersetzungsbeschleuniger (A) für das organische Peroxid (O).

6. Herstellungsverfahren für einen Antifouling-Farbfilm, umfassend das Zersetzen eines organischen Peroxids (O) in einem Stadium, bei dem eine Antifouling-Farbzusammensetzung, die ein Acrylpolymer (P), ein radikalisch polymerisierbares Monomer (M) und ein organisches Peroxid (O) umfasst, auf ein Substrat aufgebracht ist, wobei das Acrylpolymer (P) und wahlweise das radikalisch polymerisierbare Monomer (M) eine zweiwertige Metallesterstruktur aufweist, und wobei die Menge des in der gesamten Masse des Acrylpolymers (P) und des radikalisch polymerisierbaren Monomers (M) enthaltenen Metalls 2 bis 40 Masse-% beträgt.

7. Antifouling-Farbfilm, erhalten durch das Herstellungsverfahren nach Anspruch 6.

## Revendications

1. Une composition de peinture antisalissure comprenant un polymère acrylique (P), un monomère polymérisable radicalement (M) et un peroxyde organique (O), dans laquelle le polymère acrylique (P) et éventuellement le monomère polymérisable radicalement (M) a une structure d'ester de métal bivalent, et la quantité du métal contenu dans la masse totale du polymère acrylique (B) et du monomère polymérisable radicalement (M) est de 2 à 40 % en masse.

2. La composition de peinture antisalissure selon la revendication 1, dans laquelle le polymère acrylique (P) a un indice d'acide de 25 mg KOH / g ou plus.

3. La composition de peinture antisalissure selon la revendication 1 ou 2, dans laquelle le polymère acrylique (P) est obtenu par polymérisation d'un monomère polymérisable radicalement ayant une structure d'ester de métal bivalent.

4. La composition de peinture antisalissure selon la revendication 1 ou 2, comprenant en outre un accélérateur de décomposition (A) pour le peroxyde organique (O).

5. La composition de peinture antisalissure selon la revendication 3, comprenant en outre un accélérateur de décomposition (A) pour le peroxyde organique (O).

6. Un procédé de fabrication d'un film de peinture antisalissure, comprenant la décomposition d'un peroxyde organique (O) dans un état dans lequel une composition de peinture antisalissure comprenant un polymère acrylique (P), un monomère polymérisable radicalement (M) et un peroxyde organique (O) est appliquée sur un substrat, dans lequel le polymère acrylique (P) et éventuellement le monomère polymérisable radicalement (M) a une structure d'ester de métal bivalent, et la quantité du métal contenu dans la masse totale du polymère acrylique (B) et du monomère polymérisable radicalement (M) est de 2 à 40 % en masse.

7. Un film de peinture antisalissure obtenu par le procédé de fabrication selon la revendication 6.
